**Europäisches Patentamt**

**European Patent Office**

**Office européen des brevets**

(19)

(11) Publication number : **0 517 681 A2**

(12) # EUROPEAN PATENT APPLICATION

(21) Application number : **92830295.9**

(22) Date of filing : **04.06.92**

(51) Int. Cl.⁵ : **F24C 9/00**

(30) Priority : **06.02.92 IT MI920240**
**07.06.91 IT MI911570**

(43) Date of publication of application :
**09.12.92 Bulletin 92/50**

(84) Designated Contracting States :
**CH DE ES FR GB LI SE**

(71) Applicant : **SMEG S.p.A.**
**Via Circonvallazione Nord, 36**
**Guastalla (Reggio Emilia) (IT)**

(72) Inventor : **Bertazzoni, Roberto**
**Via Maldotti, 2**
**Guastalla (Reggio Emilia) (IT)**

(74) Representative : **Adorno, Silvano et al**
**c/o SOCIETA' ITALIANA BREVETTI S.p.A. Via**
**Carducci, 8**
**I-20123 Milano (IT)**

(54) **Steam cooking oven.**

(57)   A domestic cooking oven provides for an exclusive or partial utilization, in the second case for a mixed-type cooking, of the steam produced by a steam generator at the inside of the oven which can be a convection oven or a static one, electrically or gas-heated. Water is fed through a drawer being positioned for this purpose at the front panel. Although cooking can occur directly within the oven hearth, there will be preferably provided a steel pan, with a cover of pyrex, at the bottom of which an opening is formed to receive directly the steam. Steam control thermostats are provided which will allow the steam to let into the oven only when the latter reaches a temperature of at least 130°C, as well as suitable microswitches for stopping steam inlet upon opening the oven door.

Fig.1

EP 0 517 681 A2

The present invention relates to a steam oven which can be either of the static or of the convection type and adapted to preferably cook in a closed vessel with heat and steam source from the inner bottom plate of the oven. The heating elements at the bottom are either electrical or gas-based.

It is known that recently domestic cooking ovens have been put on the market which provide for generating steam that can be caused to flow, through a hose, inside a baking-pan containing the food to be cooked. However a cooking system of this type is not completely satisfactory.

A domestic oven has been now conceived, and forms the object of the present invention, in which the steam cooking is in addition to the typical cooking provided by the oven (electric, gas- or microwave- oven) thus giving rise to a mixed-type cooking that allows to reduce the time required, to keep soft the food without altering its nourishing value, to limit the fats, thereby to obtain dietetic foodstuffs, beyond a broader cooking assortment with respect to a conventional oven.

This is achieved by a domestic cooking oven comprising a water tank adapted to be fed from outside by means of a partially extractable drawer. Such a tank is in fluid communication with an evaporator or steam generator provided with suitable heating means.

The steam generator within the muffle can also flow inside a baking-pan placed on the oven sole or bottom.

The above-mentioned steam generator is located at the same plane of the oven sole, with a corresponding portion of this sole forming the ramovable cover of said evaporator, thus rendering easily accessible the evaporation cup for maintenance and cleaning purposes.

According to a particular aspect thereof, the present invention also comprises a baking-pan to be used in said oven, having at least the bottom made of steel, as well as preferably the side walls and a cover of pyrex glass, said bottom having a central opening suitably dimensioned for the steam directly flowing into the pan interior. The steel bottom aids cooking by heat conduction from the resistors or gas burners placed on the oven bottom, while the cover of pyrex glass lets radiation from above pass through, e.g. from a grill resistance at the oven ceiling.

These and further objects, advantages and features of the improved steam oven according to the invention will be clearer from the following detailed description of an embodiment thereof, given by way of a non-limiting example, with reference to the annexed drawings in which:

FIGURE 1 is a schematic front view of an embodiment of the oven according to the invention, with front wall completely removed to show the inner parts directed to steam generation;

FIGURE 2 shows a cross section view along line II-II of figure 1; and

FIGURE 3 shows a partial, exploded view of the cooking region in the oven of figure 1 only.

With reference to the drawings, the oven according to the present invention comprises at the front portion thereof, sideways with respect to the access door to the cooking space or muffle 1, and preferably below the control or front panel 10, a water charging drawer 2, partially extractable like that present on washing machines for detergent charging. It is in direct communication with a water tank 3 thereunder, along a side of the oven, between the hearth or muffle 1 and an outer lateral wall of the oven itself.

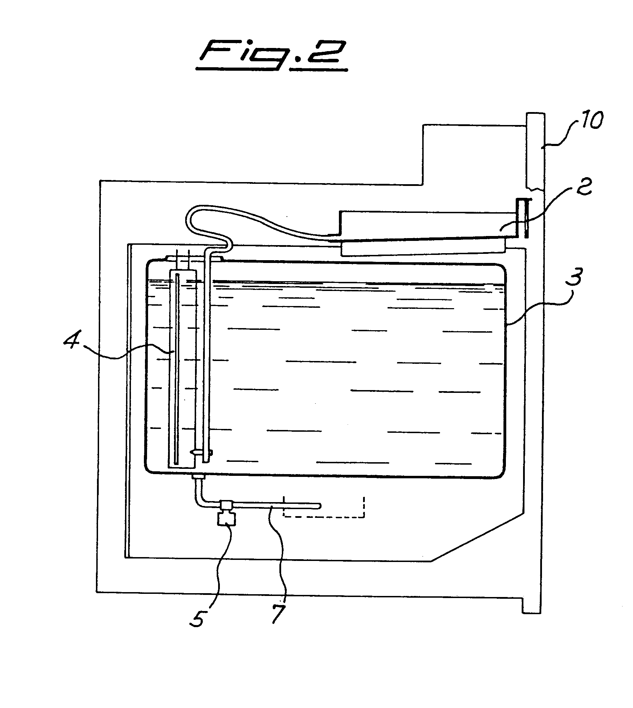

As seen in figure 2, a level gauge 4 inside the tank 3 indicates at the outside, by a special signal, that the level is normal, or a warning light on the front panel 10 is turned on in case of too low level, thus indicating a need of refilling the tank with water. A thermovalve 5 thermostatically draws from tank 3 as much water as needed by generator 6 to which it is fed through a conduit 7. From generator 6, the steam uniformly flows within the oven hearth 1 throughout a passage 11.

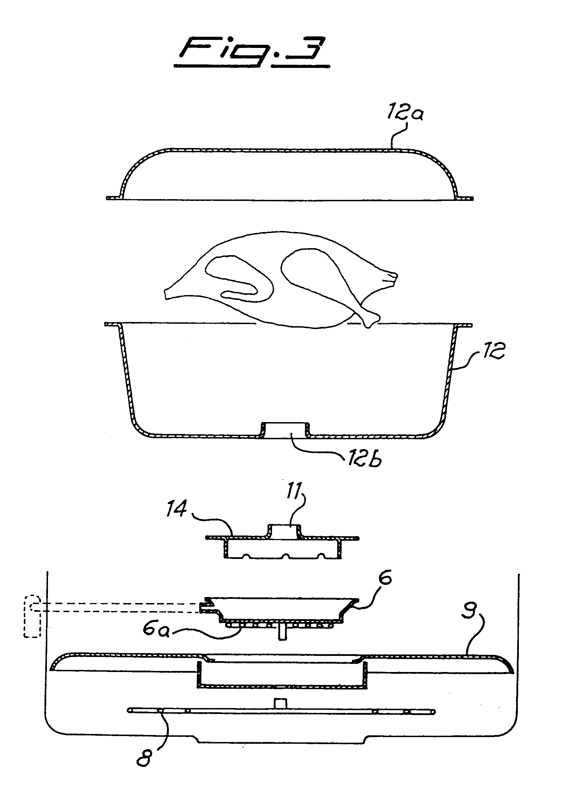

Steam generator 6 is housed, with its heating elements 6a, in a cavity among the heating elements 8 (resistors or burners) under the oven sole 9. As better shown in figure 3, it is covered by an extractable lid 14 which ensures the continuity of bottom 9, as it is flush therewith. Said passage 11 is provided by an opening of lid 14.

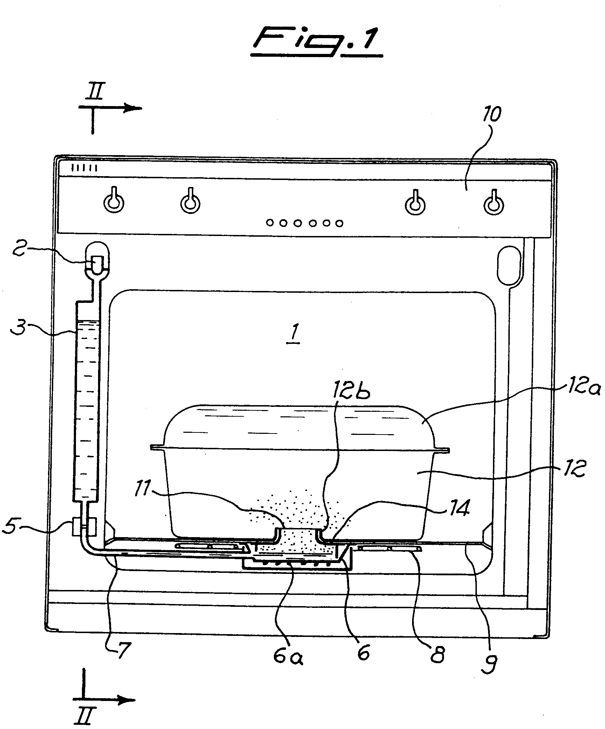

The heating element 8 of oven bottom may also be itself removable to help oven cleaning and is formed of resistances or gas-burners to heat the oven sole 9 by generating heat through thermal conduction at the pan bottom and through radiation in the oven muffle 1. The cooking may occur by freely placing footstuffs within the hearth 1, or preferably by using a baking-pan 12, as shown in figure 1, whose bottom is of stainless steel, as well as the side walls can be, whereas the cover 12a is preferably of refractory glass or pyrex, which is transparent to radiation that may come from oven ceiling, such as a grill not shown in the drawing, so as to improve cooking by rendering the same more uniform, with a more attractive aspect of "roasting" of the upper surface of the food. Of course the bottom of pan 12 will have an opening 12b in the central zone for diffusion of steam at the inside thereof, in correspondence of passage 11 in the lid 14, and preferably flared outwards for retaining liquids. It will be noted that heating occurs from the bottom of pan 12 by means of conduction from heating elements 8, by contact with steam from passage 11 and possibly by convection or radiation through pan cover 12a from the upper resistance.

Still according to the present invention, the steam is produced by generator 6, i.e. its heating resistances 6a (as seen in figures 1 and 3) are switched on by means of a suitable thermostat only when the temperature within oven 1 reaches and exceeds a minimum temperature of 130°C, in order to avoid condensate on the inner and outer walls of the oven. It should be appreciated that one of the controls on the front panel 10 provides for regulation of the quantity of steam supplied by varying the duration of heaters 6a operation, in other words by rendering more or less frequent and long the time intervals in which the heaters are inactive because the electric feed is cut out, such as by means of a time switch.

There can be provided also a microswitch positioned at the oven door, such as to control the steam stop, e.g. by switching of resistances 6a with contemporary switching on the inner light in the oven.

An electric device for draining water, which is also controllable through the front panel 10, causes all water to be discharged from tank 3 directly into the evaporator cup when the latter is not in function. This operation is carried out preferably at the end of each cooking in order to remove any residual of extraneous substance which may have been introduced, such as acids, etc., as well as for cleaning deposits that may be formed in the evaporator.

Possible additions and/or modifications can be provided by those skilled in the art with reference to the above-described and illustrated embodiments of the steam cooking oven according to the present invention and without exceeding the scope of the invention itself.

## Claims

1. A cooking domestic oven comprising a water tank (3), which can be fed from the outside through a partially extractable drawer (2), said tank (3) being in communication with a steam generating evaporator (6) provided with suitable heating means (6a), characterized in that the generated steam flows within the cooking volume or muffle (1) of the oven through an opening (11) formed in an extractable lid (14) of said generator, which is placed in the central zone of the oven bottom or sole (9), electric or gas heating means (8) being provided thereunder.

2. An oven according to claim 1, characterized in that said generator (6) is arranged within said muffle (1) at the same level of the oven sole (9) with a portion (14) of the latter forming the extractable lid of said generator (6).

3. An oven according to claim 2, characterized in that said generator (6), with its heating elements (6a) is housed in a hollow formed on the plane of oven sole (9), at a central zone thereof without heating elements (8), said extractable lid (14) being flush with said sole (9) and having an opening (11) for feeding steam also in the muffle (1).

4. An oven according to claim 1, characterized by further comprising a pan (12) having at least its bottom in stainless still with the central opening (12b) in correspondence with the said opening (11) and shaped for retaining liquids, positioned on the oven sole (9), whereby its bottom is heated through conduction from said elements (8).

5. An oven according to claim 4, characterized in that said pan (12) is provided with a cover (12a) of a material which is transparent to the radiation from ceiling of the oven muffle (1), such as in pyrex.

6. An oven according to anyone of the preceding claims, characterized in that it comprises a thermovalve (5) between said tank (3) and steam generator (6) for feeding the latter in function of the temperature reached.

7. An oven according to anyone of the preceding claims, characterized in that it comprises a thermostat for the actuation of said heating means (6a) only when a temperature is reached of at least 130°C in the oven muffle (1).

8. An oven according to anyone of the preceding claims, characterized in that it comprises within said tank (3) a level gauge (4) with signalling at the outside whether the level is sufficient or not.

9. An oven according to anyone of the preceding claims, characterized in that it comprises a control for regulating the steam quantity supplied, being capable of varying time of intervention or operation of the heating means (6a).

10. An oven according to anyone of the preceding claims, characterized in that the heating elements (8) of the oven sole are extractable.

# Fig.1

Fig.2

# Fig.3

12a

12

12b

14

11

6

6a

9

8